(19) **Europäisches Patentamt / European Patent Office / Office européen des brevets**

(11) **EP 1 533 985 B1**

(12) **EUROPEAN PATENT SPECIFICATION**

(45) Date of publication and mention
of the grant of the patent:
**20.01.2010 Bulletin 2010/03**

(51) Int Cl.:
***H04M 11/06*** (2006.01)

(21) Application number: **04256715.6**

(22) Date of filing: **29.10.2004**

(54) **Direct access arrangement**

Datenzugriffsanordnung

Dispositif d'acces au reseau

(84) Designated Contracting States:
**DE FR GB**

(30) Priority: **30.10.2003 GB 0325301**

(43) Date of publication of application:
**25.05.2005 Bulletin 2005/21**

(73) Proprietor: **Mitel Networks Corporation
Ottawa, ON K2K 2W7 (CA)**

(72) Inventor: **Ahmed, Tahir
Nepean
Ontario K2B 7T6 (CA)**

(74) Representative: **Naismith, Robert Stewart et al
Marks & Clerk LLP
Aurora
120 Bothwell Street
Glasgow
G2 7JS (GB)**

(56) References cited:
DE-A1- 4 009 954 US-A- 4 182 936
US-A- 4 190 747 US-A- 5 140 631
US-A- 5 600 715 US-A- 6 134 321
US-A1- 2003 035 534 US-B1- 6 573 729
US-B1- 6 584 196

## Description

### Field Of The Invention

This invention relates in general to communication systems, and more particularly to a Direct Access Arrangement (DAA) incorporating optocouplers for interfacing analog devices (e.g. telephone, modem, fax) to a Central Office (CO) or Private Branch Exchange (PBX).

### Background of the Invention

DAAs provide an interface between the CO telephone line (tip and ring pair) and analog devices such as a telephone, modem, or fax machine. A DAA is required to perform several functions in accordance with the national specifications of a country. The tip and ring pair is required to be compatible with Plain Old Telephone Service (POTS), giving rise to the requirement that the DAA, for the purposes of coupling with the CO line, must resemble a POTS device.

In order to resemble a POTS device, the DAA must perform a number of electrical functions. It must provide over-voltage protection from signaling or environmental conditions such as lightning, power cross, or electrostatic discharge, along with polarity definition to mate the appropriate tip and ring voltages with the local circuit. The DAA must present a specific AC impedance (600 ohms in North America, but varying by jurisdiction) to the CO line and, more importantly, sink a predetermined DC current (20-120 mA, depending on the jurisdiction of the CO line). Receiver handset on/off hook control must be provided, as well as conversion of the bi-directional line signal to individual unilateral transmit and unilateral receive signals. Typically, the DAA must also include a detector to ensure line availability and a transhybrid balance network to cancel any transmitted signal that is reflected from the CO line.

Furthermore, inclusion of a DAA in highly integrated technology (e.g. a PCMCIA modem) requires compact placement of components on a printed circuit board (PCB). It is desirable that the components use a minimum of PCB real estate and that component elevation from the PCB surface is minimal.

In reference to the DAA requirement of presenting a specific AC input impedance to the line, this is usually accomplished by using a discrete impedance or an active impedance block. However, the use of discrete components conflicts with the need for compact placement discussed above.

Typically, optocouplers are used to provide isolation between the device and CO line. However, optocouplers require active components (i.e. buffers) on the line side. These active components use power isolated from the device side circuitry. Therefore, the line side circuitry is often line powered. Filtering tip and ring for power usage introduces extra bulky components while directly coupling the tip and ring to the line side circuitry introduces AC current feedback signals that cause distortion and noise.

The problem of AC current feedback is addressed in USP 5,481,606 (Andrieu), USP 5,528,686 (Cwynar), and USP 5,946,393 (Holcombe). The solutions of Andrieu and Holcombe use a parallel current method to eliminate feedback. The solution of Cwynar uses substantially constant current sink amplifiers that do not generate feedback.

The above-discussed prior art DAA implementations that address current feedback suffer from extensive use of large or discrete parts. This is also in conflict with the aforementioned goal of compact placement.

Also, with reference to the requirement that the DAA must resemble a POTS device, the prior art teaches the use of gyrators for sinking CO line current. Such gyrators use large reactive components, or alternatively, introduce high distortion and add to cost and real estate.

Finally, with reference to the DAA requirement of providing line status detection, the prior art teaches the use of battery detector circuits implemented by inserting an isolated current or voltage sensor in the current path, thereby adding to cost and real estate.

US 6 573 729 B1 describes a circuit for synthesizing a prescribed impedance.

US6584196 describes an electronic inductor circuit in which an operational amplifier drives the base of the electronic inductor transistor, and receives negative feedback from the emitter of the transistor. The transistor and operational amplifier combine to form a voltage-controlled current source with respect to the loop current. A voltage divider connected across the rectified Tip and Ring voltage (or another node of the circuit at an equivalent voltage) provides a DC reference to the positive input of the operational amplifier, so that the line current automatically increases with an increase in line voltage. A capacitor couples the transmit signal driver to the positive input of the operational amplifier. This electronic inductor circuit can be driven using a low voltage supply and provides sufficient linearity for high-speed modem applications.

### Summary of the Invention

According to one aspect of the invention, a DAA is configured to resemble a current source for generating an AC current flow in the tip and ring that is proportional to the voltage thereon, with a given proportionality constant. The DAA therefore presents a specific input impedance to the CO line depending on the proportionality constant of the current source.

According to another aspect of the invention, feedback of AC current on the tip and ring resulting from line side powering of isolation optocouplers is eliminated by monitoring feedback AC current flow through the line and generating equal and opposite current flow in the line to cancel the feedback AC current..

According to a further aspect of the invention, a shunt regulator is used to draw or sink DC current from the line at 20-120 mA (depending on the jurisdiction). Although the shunt regulator also allows AC current to flow, the AC current is sensed, as discussed above, and an equal but opposite phase current is generated on the tip and ring to compensate for the AC current drawn by the load (i.e. shunt regulator).

According to yet another aspect of the invention, DC bias current flowing through the receive optocoupler as a result of the application of line power, is sensed to provide a battery detect function. This eliminates the prior art requirement for a separate isolated battery detector.

## Brief Description of the Drawings

A detailed description of the preferred embodiment of the present invention is provided herein below with reference to the accompanying drawings in which:

Figure 1 is a block diagram of a Direct Access Arrangement (DAA) of the prior art;
Figure 2 is a schematic diagram of a Direct Access Arrangement (DAA) in accordance with the preferred embodiment of the invention; and
Figures 3a - 3d are schematic diagrams showing prior art line current sink circuits.

## Detailed Description of the Invention

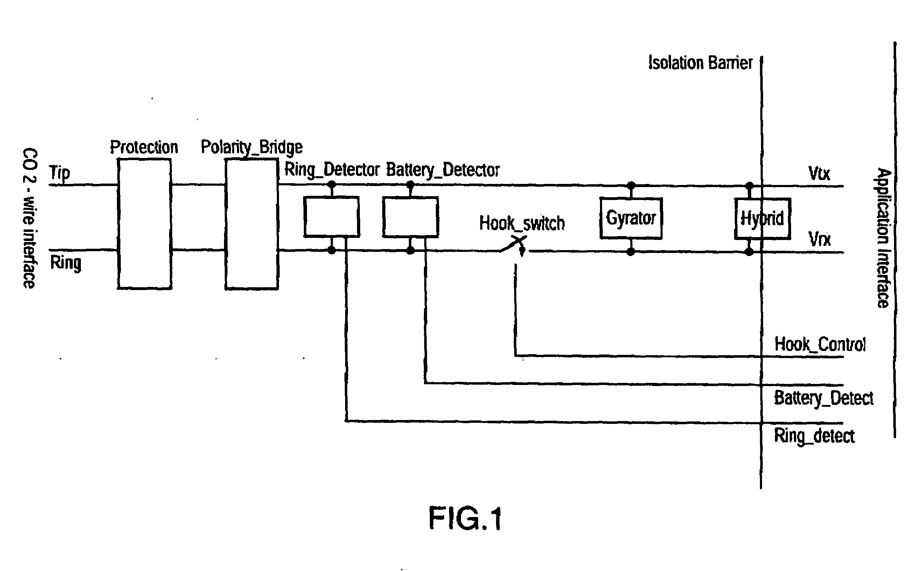

Turning to Figure 1, a prior art DAA is shown connected to the CO line.

The two-wire CO line includes a tip and ring pair that is connected to an over-voltage protection circuit which, in turn, is connected to a polarity circuit (e.g. diode bridge) to define proper line polarity for the DAA circuitry. The purpose of the protection circuit is to prevent over-voltages from damaging the DAA or device.

A ring detector and a battery detector are connected in parallel to detect ringing voltage on the CO line and line availability, respectively. A hook switch controls on/off hook status of the DAA. A gyrator is connected to the line pair via the hook switch for sinking 20-120 mA DC current, for POTS compatibility.

A hybrid provides two-to-four-wire signal conversion between the bi-directional line pair and unidirectional transmit (Vtx) and receive (Vrx) lines. Additional circuitry provides the necessary input impedance.

The line side signals must be isolated from the device side. Conventionally, transformers have been used to provide device isolation from the CO line. A capacitor or capacitors are typically used to block the DC voltages present on the line. Large values of transformer inductance (i.e. > 3 H) and capacitance (i.e. 2 $\mu$F) are required for good low frequency response, resulting in increased size and added cost. The capacitor in most configurations must also be capable of handling high AC line voltages (caused by the ringing signal), resulting in large capacitance size. The use of such large discrete components is not suitable in a device where PCB real estate is limited and component height is constrained. For example, for a PCMCIA standard size card, whose components need to fit within a molded package having a total thickness of less than 0.1" thick, it is desirable to only use small capacitors (i.e. < 0.1$\mu$F).

In an effort to address the shortcomings of prior art DAAs incorporating transformers in terms of real estate constraints and the requirement for good low frequency response, capacitors and optocouplers have also been used for isolation. The typical optocoupled DAA circuit is divided into a CO line side that is not isolated and a device side that is isolated from the line by the optocouplers. The line side circuitry must be powered to drive the LED of the transmit optocoupler and LDD of the receive optocoupler. This power is typically drawn from the line. However this results in a number of problems such as the necessity of voltage filtering, the necessity of voltage regulation, and the feedback of signals to the CO line.

When the DAA is in an inactive (i.e. on-hook) state the line is at a high potential (typically -48 V). During the active (i.e. off-hook) state, the CO line is typically at a 5 V to 12 V potential. The DAA draws a specified amount of current from the line (i.e. a minimum of 20 mA and up to 120 mA). Since high AC signals are present on the line, the line signal must be filtered in order to be used as a clean power source. The filters and regulation circuits introduce circuit complexity and increase the component count as well as real estate requirement.

The tip and ring (after polarity correction by the diode bridge) can be used to provide supply voltage and ground, respectively, for the line side circuitry. However, AC voltages on the supply must not significantly impact the performance of the line side circuitry. Also, the load between supply and ground must not result in an AC current flow from tip to ring. The CO line, without filtering or regulation, is an acceptable power source where these two conditions are met.

The presence of AC signals on the supply gives rise to power supply noise on the DAA amplifiers. However, this problem is overcome where operational amplifiers having high Power Supply Rejection Ratio (PSRR) are used. Typical operational amplifiers have high enough PSRR that this noise does not significantly impact the transmission characteristics of the DAA.

However, considerable distortion and gain variation still results from powering the optocouplers with line power due to the feedback currents. Existing solutions to correct this problem either require a DC holding circuit and a high current transistor, or require limits on amplifier selection along with additional components.

The present invention relates specifically to improvements in prior art use of line power, input impedance and battery detection for providing line availability. Other aspects of the DAA shown in Figure 1 are set forth in the prior art literature, and therefore are not further discussed in relation to the present invention, unless strictly necessary to illustrate the improvements.

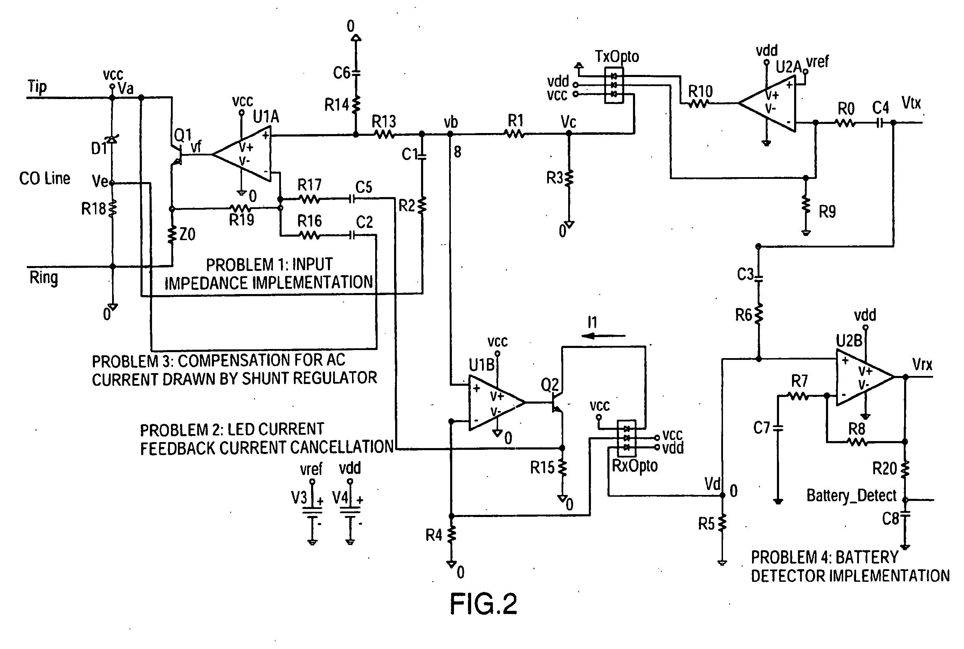

Figure 2 illustrates an exemplary embodiment of a DAA according to the present invention. The DAA interfaces a standard CO line having tip and ring to an analog device via unidirectional receive (Vrx) and transmit (Vtx) lines. For simplification, overvoltage protection, polarity bridge, ring detect and hook control circuits are not shown.

Electrical isolation between the CO and the device is provided by a pair of optocouplers (TxOpto and RxOpto). In keeping with real estate requirements for DAAs, optocouplers are normally low height components. Each optocoupler contains a Light Emitting Diode (LED) for transmitting light with an intensity proportional to the current traveling through the diode, and a Light Detector Diode (LDD). The incident light from the LED modulates the current flowing through the LDD.

One drawback of optocouplers is that the coupling between the LED and LDD is not constant over temperature. For this reason, for every LED in an optocoupler, two LDDs are provided wherein one of the LDDs is used to provide feedback to compensate for the coupling variation over temperature. This is possible since the ratio of coupling factor associated with first LDD and coupling factor associated with second LDD remains fairly constant over temperature.

The device (not shown) communicates via transmission Vtx and reception Vrx lines, with the voltage bias level of the device side circuits being established via Vref applied to the non-inverting input of amplifier U2A.

Active circuits on the CO side are powered from the tip via node Va (CO side power Vcc) and ring via node 0 (CO side common). Active circuits on the device side are powered by device power Vdd and device ground.

The transmission circuitry of the DAA is characterized by two operational amplifiers U2A and U1A. The inverting input of first transmission stage (device side) amplifier U2A is connected to Vtx via capacitor C4 and resistor R0, and connected to device ground via resistor R9. The output of amplifier U2A is connected to the transmission LED of optocoupler TxOpto via output resistor R10. Diode balancing feedback is provided by the LDD connected between the inverting input of amplifier U2A and device side power Vdd.

The first and second transmission stages are optically coupled across the isolation barrier from the transmission LED of TxOpto to the second LDD connected between node Vc and Vcc. Consequently, signal output from U2A is reproduced across resistor R3 connected between node Vc and the line side common. The voltage on node Vc (i.e. V (Vc)), is thus responsive to Vtx. Node Vc is connected to Node Vb via resistor R1. Node Vb is connected to the second transmission amplifier U1A at the non-inverting input thereof via resistor R13. The inverting input of amplifier U1A is connected to CO line side common via resistor R17, capacitor C5, and resistor R15. The output of amplifier U1A is connected to the base of BJT Q1 base. The collector of Q1 is connected to the tip and the emitter thereof is connected to feedback resistor R19, which is connected to the inverting input of amplifier U1A. The emitter of BJT Q1 is also connected to the ring via resistor ZO.

The receiver circuitry of the DAA is also characterized by two operational amplifiers U1B and U2B. The non-inverting input of first receiver stage (CO side) amplifier U1B is connected to Vb. The inverting input thereof is connected to CO line side common via resistor R4. The output of amplifier U1B is connected to the base of BJT Q2. Node Vb is connected to the tip via capacitor C1 and resistor R2. The BJT Q2 collector is connected to CO power Vcc via the transmission LED of RxOpto and the emitter is connected to the junction of capacitor C5 and resistor R15. Optical feedback is provided, as discussed above in connection with TxOpto. CO power Vcc is applied to the inverting input of amplifier U1B via the LDD of RxOpto connected to R4.

The first and second receiver stages are optically coupled across the isolation barrier from the transmission LED of RxOpto to the LDD connected between node Vd and Vdd. Consequently, signal output from U1B is reproduced across resistor R5 connected between node Vd and device side ground. The voltage at node Vd is thus responsive to the CO line signals. Node Vd is connected directly to the non-inverting input of amplifier U2B. The inverting terminal of amplifier U2B is connected to device ground via resistor R7, and capacitor C7. The output of amplifier U2B is connected directly to the Vrx terminal of the device and via feedback resistor R8 to the inverting input thereof. The output of U2B is also connected via resistor R20 and capacitor C8 to device ground. The node connecting R20 and C8 is connected to a battery-detect output terminal.

Since the CO line is bi-directional, signal transmissions from the device are fed back to the device for reception, via node Vb. In order to compensate for this feedback the transmitter (at Vtx) is coupled to the receiver (at Vd) via bi-directional feedback resistor R6 and capacitor C3.

The DAA of the present invention incorporates a shunt regulator from tip to ring including zener diode D1 in series with a resistor R18. The junction of the regulator is node Ve. This node is connected to the inverting input of amplifier U1A via capacitor C2 and resistor R16.

The non-inverting input of amplifier U1A is connected to CO line side common via resistor R14 and capacitor C6.

One inventive feature of the DAA according to the present invention is the elimination of AC feedback current in the line by monitoring amount of current flowing and in response generating an equal but opposite current flow , resulting in zero net current flow. This approach eliminates the need for a DC holding circuit and any high current transistors. Moreover there is no constraint requiring the use of constant current sink amplifiers, nor is the generation of an invariant bias voltage required. This reduces the part count, parts complexity and real estate requirement.

Operation of this feature is as follows. As shown in Figure 2, an AC current, I1, flows from Vcc through BJT Q2 and resistor R15 to the line side circuit common. Hence the AC voltage across resistor R15 is I1*RR15. The AC voltage at the emitter of Q1 is

$$V(QQ1e) = -RR19/RR17 * I1 * RR15, \tag{1}$$

and the AC current flow through Q1e is

$$I(QQ1e) = -RR19/RR17 * I1 * RR15 / Z0 \tag{2}$$

This requires the current flow through the collector of Q1 to be

$$I(QQ1c) = \beta/(\beta+1) * I(QQ1e) = - \beta/(\beta+1) * RR19/RR17 * I1 * RR15 / Z0 \tag{3}$$

If

$$RR19/RR17 = 1 \text{ and } Z0 = RR15 * \beta/(\beta+1) \tag{4}$$

Then

$$I(QQ1c) = -I1. \tag{5}$$

Since AC current I1 flows from Vcc to common and AC current -I1 also flows from power Vcc to common, the net AC current flowing is zero.

In addition to constraints imposed by equation (4), the values of resistors are chosen such that enough DC current flows through the transmit and receive LEDs for them to operate in a linear region. Since very little current is consumed by the operational amplifiers U2A, U1A, U1B, and U2B, sufficient current is available to enhance the linearity of the optocoupler LEDs.

A second feature of the DAA according to the present invention is the incorporation of an improved transhybrid network. The AC Voltage at Vb passes through the receive optocoupler RxOpto such that voltage on Vd is equal to the voltage on Vb. The voltage on Vb comprises both the transmit and receive signals. However, the amount of the transmit signal at Vb is known. This is subtracted from the voltage on Vd at the device side via compensating resistor R6, resulting in a cancellation of transmit signal at the summing node Vd. In this implementation of the transhybrid network, extra amplifier stages are not required.

The input impedance is produced by the additional feedback path comprising resistor R2 and capacitor C1 in conjunction with the 2nd transmission stage (the transmission stage incorporating operational amplifier U2A) and the ground path resistor R14 and capacitor C6. The existing configuration taps the tip/ring voltage (the tap is the resistor network R2, R13, R14), and feeds it back to the 2nd stage amplifier U1A. The amplifier U1A is configured with respect to the additional feedback as a voltage controlled current source, where the positive terminal is the voltage input from the tap. The resulting current, determined by the selection of feedback resistor R19 and output resistor ZO, sources transistor Q1, largely determines AC tip/ring current. The ultimate effect is one of apparent impedance, determined by the ratio of tip/ring AC voltage to tip/ring AC current.

For POTS compatibility, the DAA of the present invention draws at least 20 mA and up to 120 mA of line current. By drawing the holding current from the telephone line, the DAA signals the central telephone office that it is active to either originate or complete a communications connection with the central office (CO). The holding current is generally specified by a national standard, which varies from one country to another in the range of 20 to 120 mA.

Varying existing solutions have drawbacks, such as requirements for large discrete capacitors or inductors, poor performance over a wide range of frequencies, lower line termination impedance, high levels of distortion in the signals transmitted and received, and/or utilization of current that cannot be used to drive other circuits.

According to a further aspect of the invention, the line side circuitry is line powered and the driving transistors are biased such that about 20 mA of current is used when tip/ring voltage is at an operating voltage of 6V. Hence, there is no need to activate a separate DC current sink circuit. However, at higher tip/ring voltages the DAA is required to draw more line current (up to 120 mA).

Zener diode D1, in series with a resistor R18 is connected across the tip and ring. The zener voltage is selected as the operating voltage of the DAA. Where the tip/ring voltage increases beyond the operating voltage, the zener D1 conducts and a constant resistive load is present across the tip/ring. This resistor R18 is selected such that it draws any excess current once the tip/ring voltage goes higher than the operating voltage of the DAA. However, since the resistor R18 is not coupled via a coil it also presents an AC load across the CO line. To eliminate this AC loading effect, the amount of current flowing through R18 is sensed via a voltage tap at Ve. This tap voltage is fed back via resistor R16 to the $2^{nd}$ transmission stage (the stage based on amplifier U2A). BJT Q1 subsequently generates an equal current but with opposite phase such that the net AC current flow on the tip/ring is zero.

As shown in Figure 2,

$$Ve = I2 * RR18 \tag{6}$$

$$V(QQ1e) = - RR19 / RR16 * Ve \tag{7}$$

$$V(QQ1e) = - RR19 / RR16 * I2 * RR18 \tag{8}$$

$$I(QQ1e) = - RR19 / RR16 * I2 * RR18 / Z0 \tag{9}$$

$$I(QQ1c) = \beta/(\beta+1) * I(QQ1e) = - \beta/(\beta+1)* RR19 / RR16 * I2 * RR18 / Z0. \tag{10}$$

Therefore if

$$\beta/(\beta+1)* RR19 / RR16 * RR18 / Z0 = 1 \tag{11}$$

Then

$$I(QQ1c) = -I1 \ (as \ required) \tag{12}$$

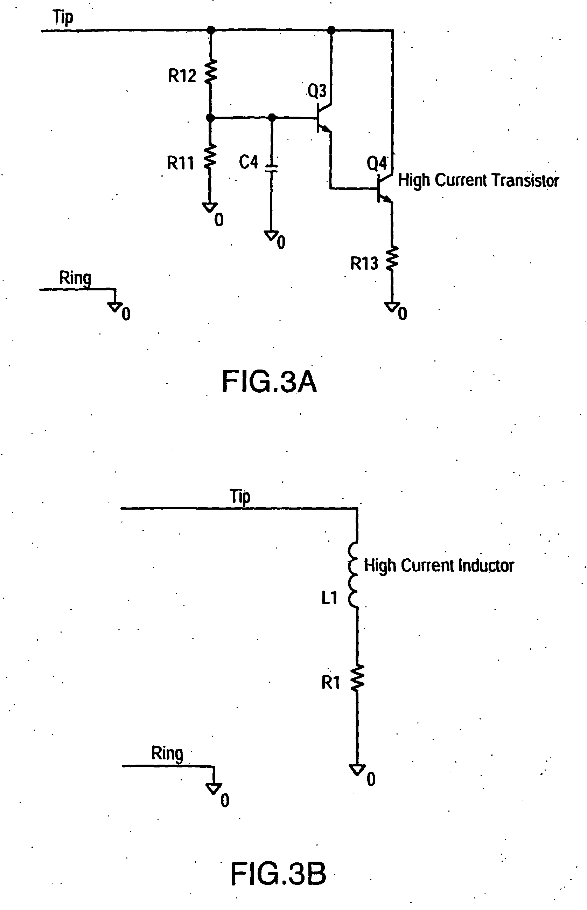

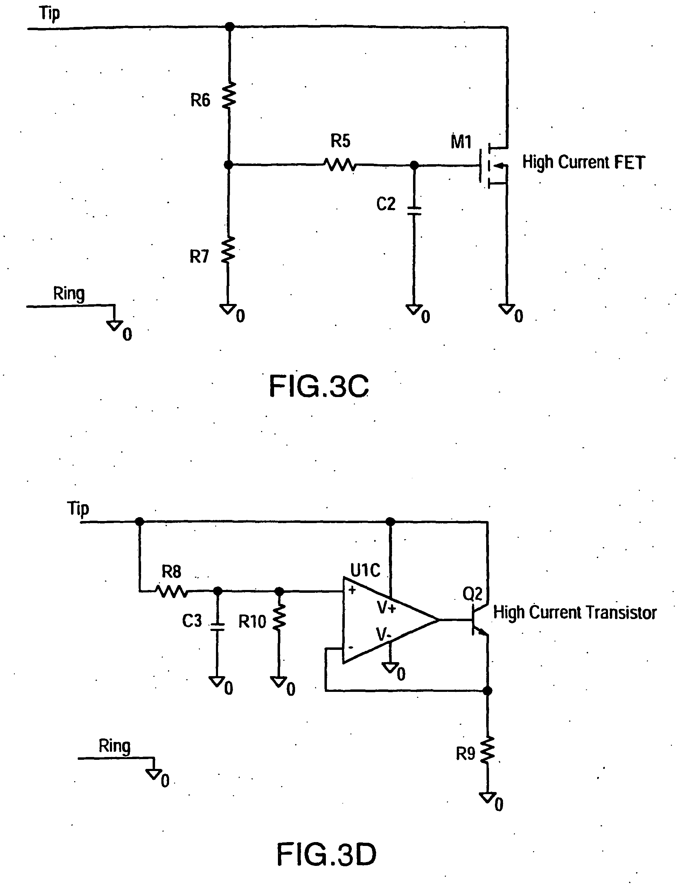

This solution eliminates the need for large capacitors to be used. Also there is no AC current leakage. Any AC current flow through resistor R18 is fed back to produce an equivalent opposite phase current on the line. The use of high current transistors, high current inductors, or FETs, as shown in the prior art circuits of Figures 3a - 3d, with their attendant real estate requirements and cost, is not required. Only zener diode D1 is required to implement the DC current sink feature of the present invention. Hence, the component count and cost is reduced as compared to the prior art.

In some communication devices (e.g. a fax machine) it is desirable to know if a line is connected to the DAA and is available for use. Conventionally, this is implemented by inserting an isolated current sense device including a dedicated optocoupler, in the DAA current path. This approach requires an extra optocoupler and a buffer for the battery detector circuit, thereby contributing to added cost and real estate requirements.

Therefore, in accordance with yet another aspect of the invention, line availability information is transmitted through the receive optocoupler RxOpto and, hence, a separate detector (i.e. optocoupler etc.) is not required. The line side is powered from the CO line, as discussed above. When the battery voltage is present (i.e. line available), the line side circuitry is active and bias current flows through the receive optocoupler LED. The coupled current through the associated LDD generates a bias voltage on node Vd. This results in a bias voltage charging capacitor C8. The device then determines line availability by taking the voltages across C8.

The present invention, as embodied in the DAA of Figure 2, combines an improved receive LED circuit, a transmit circuit, an input impedance circuit, a transhybrid loss circuit, a battery detect circuit, isolation circuit, and a DC line current draw circuit. The described improvements significantly decrease the component count and real estate requirements and thereby drive the DAA cost down while maintaining or excelling the performance of conventional designs.

It will be appreciated that, although an embodiment of the invention has been described and illustrated in detail, various modifications and changes may be made. The selection of resistances and capacitances may be made by those familiar with the operating requirements of a standard DAA, except where this disclosure provides direction. It will be appreciated that the aspects of the invention may be implemented separately, or cooperatively. Any such choice of implementation may be made without departing from the scope of the invention as described by the claims appended herein.

**Claims**

1. a Direct Access Arrangement (DAA) for presenting an input impedance to a central office CO line, said DAA comprising:

    a feedback path comprising a resistor (R2) and a capacitor (C1) in conjunction with a transmission stage incorporating an operational amplifier (U2A) and a ground path resistor (R14) and a capacitor (C6),
    a resistor network (R2, R13, R14) coupled to said CO line,
    an amplifier (U1A) and a transistor BJT (Q1) configured with respect to the feedback path as a voltage controlled current source,

    wherein said resistor network (R2, R13, R14) adapted to feed back a tip/ring voltage on said CO line to said amplifier (U1A),
    wherein the positive input to said amplifier (U1A) is the voltage input from said resistor network (R2, R13, R14),
    wherein said voltage controlled current source (U1A and Q1) adapted to generate an AC current proportional to the AC voltage on said CO line by a factor of $1/Z_L$, where $Z_L$ represents the impedance of said CO line, and
    a feedback resistor (R19) coupled to an emitter of said BJT (Q1) and a negative terminal of said amplifier (U1A), and an output resistor (Z0) coupled to said feedback resistor (R19) and said CO line for sinking said AC current such that said output resistor (Z0) presents said CO line with an input impedance equal to $Z_L$.

2. The DAA of Claim 1 wherein said DAA additionally comprises a transmitter, and a receiver, said transmitter and receiver having a common transcieving node, and wherein said transmitter and receiver are coupled by a compensating circuit for cancelling transmission feedback.

**Patentansprüche**

1. Direktzugriffsanordnung (DAA), um einer Amtsleitung eine Eingangsimpedanz zu präsentieren, wobei die DAA umfasst:

    einen Rückkopplungspfad, der einen Widerstand (R2) und einen Kondensator (C1) in Verbindung mit einer Sendestufe umfasst, die einen Operationsverstärker (U2A) und einen Massepfadwiderstand (R14) und einen Kondensator (C6) einschließt,
    ein Widerstandsnetz (R2, R13, R14), das an die Amtsleitung gekoppelt ist,
    einen Verstärker (U1A) und einen BJT-Transistor (Q1), der mit Bezug auf den Rückkopplungspfad als eine spannungsgesteuerte Stromquelle konfiguriert ist,
    worin das Widerstandsnetz (R2, R13, R14) dazu konfiguriert ist, eine a/bSpannung auf der Amtsleitung an den Verstärker (U1A) zurückzuführen,

worin die positive Eingabe an den Verstärker (U1A) die Spannungseingabe vom Widerstandsnetz (R2, R13, R14) ist,

worin die spannungsgesteuerte Stromquelle (U1A und Q1) dazu angepasst ist, einen Wechselstrom zu erzeugen, der mit einem Faktor von $1/Z_L$ proportional zur Wechselspannung auf der Amtsleitung ist, wo $Z_L$ die Impedanz der Amtsleitung darstellt, und

einen Rückkopplungswiderstand (R19), der an einen Emitter des BJT (Q1) und einen negativen Anschluss des Verstärkers (V1A) gekoppelt ist, und einen Ausgangswiderstand (Z0), der an den Rückkopplungswiderstand (R19) und die Amtsleitung gekoppelt ist, um den Wechselstrom abzuführen, sodass der Ausgangswiderstand (Z0) der Amtsleitung eine Eingangsimpedanz gleich $Z_L$ präsentiert.

2. DAA nach Anspruch 1, worin die DAA zusätzlich einen Sender und einen Empfänger umfasst, wobei der Sender und Empfänger einen gemeinsamen Sende- und Empfangsknoten haben, und worin der Sender und Empfänger durch eine Kompensationsschaltung verkoppelt sind, um Senderückkopplung zu unterdrücken,

**Revendications**

1. Agencement d'accès direct (DAA) destiné à présenter une impédance d'entrée à une ligne de central téléphonique CO, ledit agencement DAA comportant :

un trajet de rétroaction comportant une résistance (R2) et un condensateur (C1) conjointement avec un étage de transmission intégrant un amplificateur opérationnel (U2A), une résistance de trajet de terre (R14) et un condensateur (C6),

un réseau de résistances (R2, R13, R14) couplé à ladite ligne de central CO,

un amplificateur (U1A) et un transistor à jonctions bipolaires (Q1) configurés relativement au trajet de rétroaction en tant qu'une source de courant à tension asservie,

dans lequel, ledit réseau de résistances (R2, R13, R14) est apte à renvoyer une tension d'appel/de pointe sur ladite ligne de central CO audit amplificateur (U1A),

dans lequel, l'entrée positive au niveau dudit amplificateur (U1A) est l'entrée de tension en provenance dudit réseau de résistances (R2, R13, R14),

dans lequel, ladite source de courant à tension asservie (U1A et Q1) est apte à générer un courant c.a. proportionnel à la tension en c.a. sur ladite ligne de central CO d'un facteur de $1/Z_L$, où $Z_L$ représente l'impédance de ladite ligne de central CO, et

une résistance de rétroaction (R19) couplée à un émetteur dudit transistor à jonctions bipolaires (Q1) et à une borne négative dudit amplificateur (U1A), et une résistance de sortie (Z0) couplée à ladite résistance de rétroaction (R19) et à ladite ligne de central CO en vue d'absorber ledit courant c.a. de sorte que ladite résistance de sortie (Z0) présente à ladite ligne de central CO une impédance d'entrée égale à $Z_L$.

2. Agencement DAA selon la revendication 1, dans lequel ledit agencement DAA comporte en outre un émetteur et un récepteur, ledit émetteur et ledit récepteur ayant un noeud d'émission - réception commun, et dans lequel ledit émetteur et ledit récepteur sont couplés par un circuit de compensation en vue de supprimer une rétroaction de transmission.

**FIG.1**

FIG.2

EP 1 533 985 B1

Tip

R12

R11    C4    Q3

0    0    Q4    High Current Transistor

Ring    R13

0    0

# FIG.3A

Tip

High Current Inductor

L1

R1

Ring

0    0

# FIG.3B

R6

R5

M1

High Current FET

C2

R7

Ring

0

**FIG.3C**

Tip

R8

U1C

C3

R10

V+

Q2

High Current Transistor

V-

0

Ring

0

R9

0

**FIG.3D**

**REFERENCES CITED IN THE DESCRIPTION**

**Patent documents cited in the description**

- US 5481606 A, Andrieu
- US 5528686 A, Cwynar
- US 5946393 A, Holcombe
- US 6573729 B1
- US 6584196 B